Europäisches Patentamt

(19) European Patent Office   (11) Publication number: **0 240 100**
                                                   **B1**
Office européen des brevets

(12)                          EUROPEAN PATENT SPECIFICATION

(45) Date of publication of the patent specification:   (51) Int. Cl.⁵: **G01D 5/26,** G01F 1/32,
   **24.10.90**                                          G01L 1/24
                                                         // G02B6/00
(21) Application number: **87300384.2**

(22) Date of filing: **16.01.87**

(54) A jaw arrangement for a microbend sensor.

(30) Priority: **03.02.86 US 825414**                 (73) Proprietor: **INTERNATIONAL CONTROL AUTOMATION**
                                                      **FINANCE S.A., 16 Rue des Bains, Ville de**
                                                      **Luxembourg(LU)**

(43) Date of publication of application:              (72) Inventor: **Knudsen, James Kenneth, 8 Jodie Beth, East**
   **07.10.87 Bulletin 87/41**                          **Greenwich Road Island 02818(US)**
                                                      Inventor: **Skuratovsky, Eugene, 6576 Maplewood Drive**
                                                      **Apt. 203, Mayfield Hts. Ohio 44124(US)**
(45) Publication of the grant of the patent:
   **24.10.90 Bulletin 90/43**

                                                   (74) Representative: **Purvis, William Michael Cameron et al,**
(84) Designated Contracting States:                      **D. Young & Co. 10 Staple Inn, London WC1V 7RD(GB)**
   **DE FR GB IT SE**

(56) References cited:
   **US-A- 4 477 725**
   **US-A- 4 552 026**

**Description**

The invention relates to a jaw arrangement for a microbend sensor comprising a pair of jaws each having a facing corrugated surface for holding an optical fibre therebetween and being movable with respect to one another to bend the optical fibre to modulate light passing through the optical fibre.

Optical fibres or cables can be used to convey light between a light source and a light detector. It has been found that light in an optical fibre can be modulated by bending or otherwise distorting the fibre; this produces a modulated signal which can be picked up and processed by the light detector.

In a previously proposed microbend sensor, for example of the kind used in a vortex shedding flowmeter, a sensor beam extends into a flow of fluid the flow rate of which is to be measured. By positioning a bluff or obstruction in the flowing fluid, vortices can be formed by fluid passing over and being shed from the bluff. The vortices move the sensor beam as they pass it. The frequency of the passage of the vortices can be used as a measurement of the flow rate.

Patent Specification US-A 4 477 725 discloses a transducer in the form of a microbend sensor for a pipeline wherein a pair of blocks with sinusoidally corrugated faces are provided between the pipeline and a U-shaped bridge member welded to the pipeline, an optical fibre extends between the blocks and, when the pipeline experiences stress, the corrugated faces of the blocks act on the optical fibre to cause microbending thereof and modulation of light passing therethrough.

In a microbend beam sensor, the sensor beam has an end which is mechanically connected to one corrugated jaw of a two jaw arrangement. The other corrugated jaw is fixed in a housing of the sensor and an optical fibre is held between the corrugated jaws. The movement of the sensor beam causes squeezing and releasing of the optical fibre. Light passing through the optical fibre is thus modulated at a frequency corresponding to the passage of vortices in the fluid flow. In such microbend sensors, care should be taken to avoid overstressing of the optical fibre because this can reduce the life thereof. The optical fibre can be overstressed not only during the sensing operation, but also during a calibration step where the jaws are moved together by a determined amount in a calibration step. The jaws can inadvertently be pushed too closely together thereby damaging the optical fibre.

According to the invention there is provided a jaw arrangement for a microbend sensor comprising: a pair of jaws each having a facing corrugated surface for holding an optical fibre therebetween and being movable with respect to each other to bend the optical fibre to modulate light passing through the optical fibre, characterised in that; each corrugated surface includes a plurality of generally flat areas, disposed in a common plane extending in a direction which is substantially perpendicular to the direction of relative movement of the jaws, and a plurality of projections extending from the generally flat surfaces in the direction of relative movement of the jaws; the projections alternate with the flat areas; the projections of one of the jaws oppose the generally flat areas of the other of the jaws; and the jaws are movable together under an overload condition to cause the projections of one of the jaws to bend an optical fibre placed between the jaws against the flat areas of the other of the jaws, the height of each projection of each jaw in the direction of relative movement of the jaws being equal to a maximum allowable deflection of the optical fibre between the jaws.

Such a configuration for the jaws of a microbend sensor can accommodate overloads without adversely effecting an optical fibre held between the jaws. Thus when exposed to an overload condition pressing the jaws together, the projections press portions of the optical fibre engaged thereby against the opposed flat surfaces of the other jaw. This evenly distributes the load across the optical fibre and helps to avoid damage to the optical fibre.

The maximum allowable deflection in the microbend sensor is determined by several factors including for example, the allowable stresses on the optical fibre. Once each portion of the fibre has been bent into contact with the flat areas of one of the jaws, no further bending is possible. In this way the optical fibre will not be overstressed.

During normal operation, light passing through the optical fibre is modulated by the local bending of the optical fibre by each of the projections on the jaws. This bending produces a light loss in the optical fibre which can be detected as a signal corresponding to movement of one of the jaws with respect to the other of the jaws.

The invention is diagrammatically illustrated by way of example in the accompanying drawings; in which:-

Figure 1 is a sectional elevation of a microbend sensor in a vortex shedding flowmeter using corrugated jaws of known kind;

Figure 2 is a side elevation of corrugated jaws for a microbend sensor of the kind shown in Figure 1 and having no overload protection;

Figure 3 is a perspective view with portions cut away of a jaw arrangement in a microbend sensor with some form of overstress protection;

Figure 4 is a side elevation of the jaw arrangement shown in Figure 3, showing an overload condition;

Figure 5 is a side elevation of a jaw arrangement for a microbend sensor according to the invention; and

Figure 6 is a view similar to Figure 5 showing the jaw arrangement of Figure 5 in an overload condition under which condition the optical fibre is still not overstressed.

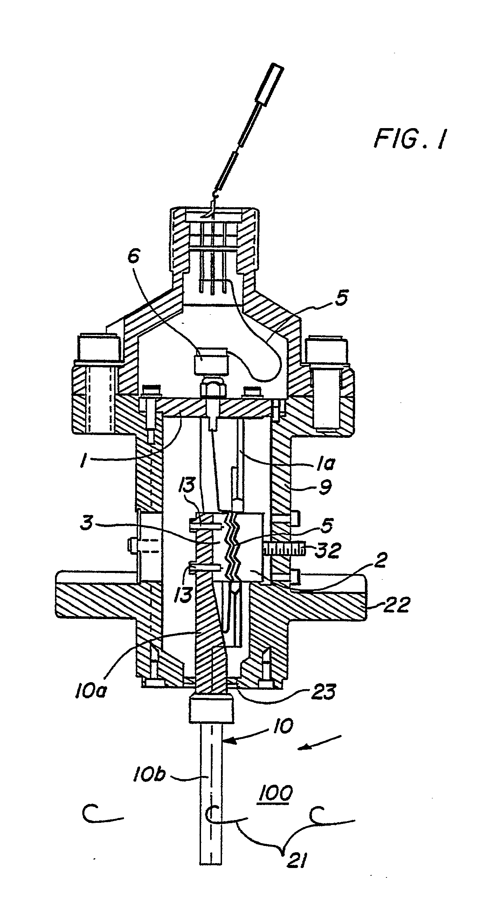

Figure 1 shows a microbend sensor used to sense the passage of vortices 21 in a fluid flow 100 on one side of a sensor housing 9 for the sensor, having a sensor housing flange 22 for isolating the sensor from the fluid flow 100.

A sensor beam 10 has an upper portion 10a which extends upwardly into the sensor housing 9, and a lower portion 10b which extends from the sensor housing flange 22 into the fluid flow 100. A pressure boundary means, for example in the form of a flexible diaphragm 23 is connected to the sensor housing 9 and isolates a sensor space in the sensor housing 9 from the fluid flow 100 on the opposite side of the flange 22.

A sensor assembly is mounted in the sensor space of the sensor housing 9. It comprises a mounting bracket 1 which has an upper flange portion that is fixed to the housing 9.

The mounting bracket 1 has a part 1a that forms a frame for holding a sensor assembly. The sensor assembly comprises a first microbend jaw 2 that is attached to the frame 1a by resilient means such as a spring. A second microbend jaw 3 is held to the first jaw 2 with an optical fibre 5 located between the first and second jaws 2 and 3. The optical fibre 5, which may be in the form of a cable, terminates in connectors 6 which are attached to the mounting bracket 1. The connectors 6 are used for coupling the optical fibre 5 to circuitry (not shown) for analyzing light passing through the optical fibre 5. The optical fibre 5 is supported and positioned by the mounting bracket 1. The second jaw 3 is held fast to the upper portion 10a of the sensor beam 10 by bolts 13.

When assembled, the second jaw 3 is rigidly held with respect to the sensor beam 10 which serves as a mechanical input to the sensor assembly. When the vortices 21 in the fluid flow 100 pass the lower portion 10b of the sensor beam 10, the sensor beam 10 is caused to pivot about the diaphragm 23. This pivotal movement is transferred to the second jaw 3 which, in co-operation with the first jaw 2, bends and releases the optical fibre 5 and thereby modulates light passing therethrough. These modulations can be detected and measured and correspond to the passage of the vortices 21.

An adjustment screw 32 is threaded into the sensor housing 9 and can be used to adjust the position of the first jaw 2 to provide calibration adjustment for the sensor assembly.

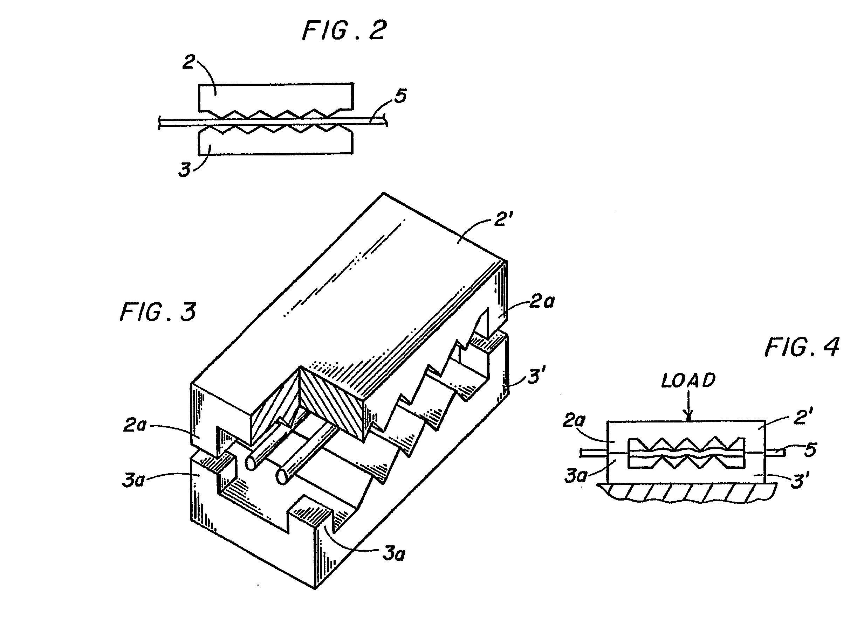

Figure 2 is a side elevation of the first and second jaws 2 and 3 with the optical fibre 5 therebetween. The corrugations are in simple zig-zag form with the projections of the corrugations of one jaw opposing valleys of the corrugations of the other jaw. If the jaws 2 and 3 of Figure 2 are overloaded when pushed in a direction towards each other, they may bend the optical fibre 5 into a bend with a smaller radius than the fibre can accommodate. This overstresses the optical fibre and leads to excessive wear or damage.

Figure 3 shows an arrangement where jaws 2′ and 3′ are provided with corner projections 2a and 3a. As shown in Figure 4, when the jaws 2′, 3′ are loaded they 2′, 3′ can move together only to the extent permitted by the corner projections 2a, 3a. This limits the amount of bending of the optical fibre 5.

The jaws 2′ and 3′ with their corner projections 2a and 3a are difficult and complicated to manufacture and and require close tolerances to avoid overbending of the optical fibre 5.

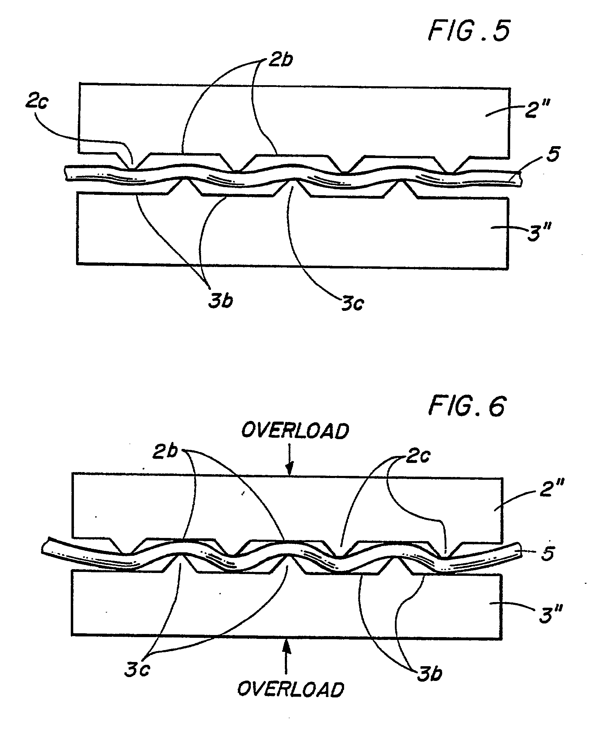

An embodiment of jaws according to the invention is shown in Figures 5 and 6. Each jaw of jaws 2″, 3″ has a corrugated portion made up of flat areas 2b, 3b which are separated by projections 2c, 3c. Each projection 2c, 3c is positioned to oppose one of the flat areas 2b, 3b of the opposing jaw and the optical fibre 5 is engaged by the projections 2c, 3c.

Figure 5 shows the normal modulating position, with the jaws 2″, 3″ being movable together by a maximum amount limited to the height of the projections 2c or 3c.

Figure 6 shows an overload condition where the projections 3c of the jaw 3″, and the projections 2c of the jaw 2″ have pressed bends in the optical fibre 5 up against flat areas 2b and 3b respectively. Thus each section of the optical fibre 5 can be bent only to a selected minimum radius, which is determined by the height of the projections 2c, 3c, the spacing between the projections 2c, 3c, that is to say the period of the corrugations, and the diameter of the optical fibre 5.

Each flat area 2b, 3b lies in a single plane in the respective jaw, which plane extends perpendicularly to the relative displacement direction of the jaws 2″, 3″.

Different corrugation patterns can also be used for the jaws. For example, the flat surfaces between the projections may be replaced by slightly concave surfaces. This can produce line contact between the optical fibre and the jaw in order to lower the stresses on the optical fibre during overload conditions. The surfaces of the jaws may also be made of a relatively soft material, perhaps even an elastic material, compared to the remainder of the jaw, in order to reduce the contact stresses as well as to reduce stresses due to impact. For the same reason the optical fibre itself may be coated, for example with aluminum.

## Claims

1. A jaw arrangement for a microbend sensor comprising:
a pair of jaws (2″, 3″) each having a facing corrugated surface for holding an optical fibre (5) therebetween and being movable with respect to each other to bend the optical fibre (5) to modulate light passing through the optical fibre (5), characterised in that;
each corrugated surface includes a plurality of generally flat areas (2b, 3b), disposed in a common plane extending in a direction which is substantially perpendicular to the direction of relative movement of the jaws, and a plurality of projections (2c, 3c) extending from the generally flat surfaces in the direction of relative movement of the jaws (2″, 3″);
the projections (2c, 3c) alternate with the flat areas (2b, 3b); the projections (2c, 3c) of one of the jaws (2″, 3″) oppose the generally flat areas (2b, 3b) of the other of the jaws (2″, 3″); and
the jaws (2″, 3″) are movable together under an overload condition to cause the projections (2c, 3c) of one of the jaws (2″, 3″) to bend an optical fibre (5) placed between the jaws against the flat areas (2b, 3b) of the other of the jaws (2", 3"), the height of each projection (2c, 3c) of each jaw (2", 3") in the direction of relative movement of the jaws (2", 3") being equal to a maximum allowable deflection of the optical fibre (5) between the jaws.

2. A jaw arrangement according to claim 1, wherein the generally flat areas (2b, 3b) are slightly concave with respect to a space between the jaws (2", 3").

3. A jaw arrangement according to claim 1 or claim 2, wherein the facing surfaces of the jaws (2", 3") which contact the optical fibre (5) are made of softer material than the remainder of the jaws.

**Revendications**

1. Un agencement de mâchoire pour un palpeur à microflexion comprenant:
une paire de mâchoires (2", 3"), chacune ayant une surface de contact crantée destinée à maintenir entre elles une fibre optique (5) et mobiles l'une par rapport à l'autre pour fléchir la fibre optique (5) afin de moduler la lumière qui la parcourt, caractérisée en ce que;
chaque surface crantée comprend plusieurs zones généralement plates (2b, 3b) disposées dans un même plan s'étendant dans une direction substantiellement perpendiculaire à celle du mouvement relatif des mâchoires et plusieurs saillies (2c, 3c) partant des surfaces totalement planes dans la direction du mouvement relatif des mâchoires (2", 3");
les saillies (2c, 3c) alternent avec les zones plates (2b,3b);
les saillies (2c, 3c) d'une des mâchoires (2", 3") sont opposées aux zones totalement plates (2b, 3b) de l'autre; et les mâchoires (2", 3") peuvent être déplacées ensemble en situation de surcharge de telle sorte que les saillies (2c, 3c) d'une des mâchoires (2", 3") fléchissent une fibre optique (5) placée entre les mâchoires contre les zones plates (2b, 3b) de l'autre des mâchoires (2", 3"), la hauteur de chaque saillie (2c, 3c) de chaque mâchoire (2", 3") dans la direction du mouvement relatif des mâchoires (2", 3") étant égale à un fléchissement maximum admissible de la fibre optique (5) entre les mâchoires.

2. Un agencement de mâchoire selon la revendication 1, dans lequel les surfaces totalement plates (2b, 3b) sont légèrement concaves par rapport à un espace entre les mâchoires (2", 3").

3. Un agencement de mâchoire selon la revendication 1 ou 2, dans lequel les surfaces de contact des mâchoires (2", 3") qui entrent en contact avec la fibre optique (5) sont faites d'un matériau plus doux que le reste des mâchoires.

**Patentansprüche**

1. Klemmbackenanordnung für einen Mikrobiegesensor mit:
einem Paar von Klemmbacken (2", 3"), welche jeweils einander zugewandte geriffelte Flächen zum Halten einer optischen Faser (5) dazwischen haben und welche zueinander beweglich sind, um die optische Faser (5) zu biegen, um Licht, welches durch die optische Faser hindurchtritt, zu modulieren, dadurch gekennzeichnet daß jede geriffelte Fläche eine Mehrzahl von im wesentlichen flachen Bereichen (2b, 3b) aufweist, welche in einer gemeinsamen Ebene angeordnet sind, die sich in einer Richtung erstreckt, die im wesentlichen senkrecht zur Richtung der Relativbewegung der Klemmbacken verläuft, und eine Mehrzahl von Vorsprüngen (2c, 3c) aufweist, welche sich von den im wesentlichen flachen Oberflächen in Richtung der Relativbewegung der Klemmbacken (2", 3") erstrecken,
die Vorsprünge (2c, 3c) mit den flachen Bereichen (2b, 3b) abwechseln,
die Vorsprünge (2c, 3c) einer der Klemmbacken (2", 3") den in etwa flachen Bereichen (2b, 3b) der anderen der Klemmbacken (2", 3") gegenüberliegen, und
die Klemmbacken (2", 3") unter einem Überlastzustand gemeinsam bewegbar sind, um zu bewirken, daß die Vorsprünge (2c, 3c) einer der Klemmbacken (2", 3") eine optische Faser (5), welche zwischen den Klemmbacken angeordnet ist, gegen die flachen Bereiche (2b, 3b) der anderen der Klemmbacken (2", 3") biegen, wobei die Höhe jedes Vorsprunges (2c, 3c) jeder Klemmbacke (2", 3") in Richtung der Relativbewegung der Klemmbacken (2", 3") gleich der maximal zulässigen Umlenkung der optischen Faser (5) zwischen den Klemmbacken ist.

2. Klemmbackenanordnung nach Anspruch 1, wobei die im wesentlichen flachen Bereiche (2b, 3b) bezüglich eines Raumes zwischen den Klammern leicht konkav sind.

3. Klemmbackenanordnung nach Anspruch 1 oder 2, wobei die einander zugewandten Flächen der Klemmbacken (2", 3"), welche mit der optischen Faser (5) in Berührung treten, aus einem weicheren Material hergestellt sind als der übrige Teil der Klemmbacken.

FIG. 1

FIG. 2

FIG. 3

FIG. 4

*FIG.5*

*FIG.6*

OVERLOAD

OVERLOAD